# EUROPÄISCHE PATENTSCHRIFT

(11) **EP 4 080 088 B1**
(45) Veröffentlichungstag und Bekanntmachung des Hinweises auf die Patenterteilung: **15.07.2026**
(21) Anmeldenummer: 22168895.5
(22) Anmeldetag: 19.04.2022
(51) Int. Cl.: F16H 49/00

(54) **SPANNUNGSWELLENGETRIEBE**
STRAIN WAVE GEAR
ENGRENAGE À ONDES DE DÉFORMATION

(30) Priorität: 19.04.2021 LU 500057
(43) Veröffentlichungstag der Anmeldung: 26.10.2022
(73) Patentinhaber: Ovalo GmbH, 65555 Limburg (DE)
(72) Erfinder:
(74) Vertreter: Hoffmann, Jürgen

(56) Entgegenhaltungen:
- DE-A1- 102018 123 915
- DE-A1- 102019 117 853
- US-A- 2 595 121
- US-A- 4 929 098
- US-A1- 2011 274 382

## Beschreibung

Die Erfindung betrifft ein Spannungswellengetriebe mit einem Wellengenerator, der mittels eines radialflexiblen Wälzlagers relativ zu einem Flexspline rotierbar gelagert ist, wobei das radialflexible Wälzlager mehrere Wälzkörper aufweist, die keine Kugeln sind und deren Wälzflächen über ihre axiale Länge keinen zylindrischen Anteil aufweisen, und wobei das radialflexible Wälzlager zwei Laufflächen, nämlich eine innere Lauffläche und eine äußere Lauffläche, aufweist, zwischen denen die Wälzkörper angeordnet sind und auf denen die Wälzkörper abrollen.

Ein Spannungswellengetriebe besitzt zumeist ein starres, in einem Querschnitt senkrecht zur Axialrichtung kreisförmiges, innenverzahntes Zahnrad, das auch Circularspline genannt wird, und ein flexibles außenverzahntes Zahnrad, das auch Flexspline genannt wird und in dem von dem starren, innenverzahnten Zahnrad umgebenen Raumvolumen angeordnet ist. In dem außenverzahnten Zahnrad ist ein zumeist elliptischer Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das radialflexible Wälzlager und das radialflexible, außenverzahnte Zahnrad zu einer elliptischen Form, um die Verzahnungen des innenverzahnten Zahnrades und des flexiblen außenverzahnten Zahnrades an jedem Ende der Ellipsen-Hauptachse (Hochachse) miteinander in Eingriff zu bringen. Bei dem radialflexiblen Wälzlager handelt es sich zumeist um ein Wälzlager mit Wälzkörpern, die als Kugeln ausgebildet sind.

Das radialflexible, außenverzahnte Zahnrad weist zumeist eine geringere Anzahl von Zähnen auf, als das starre, innenverzahnte Zahnrad. Wenn der Wellengenerator rotiert, wälzt die Außenseite des außenverzahnten Zahnrades auf der Innenseite des innenverzahnten, starren Zahnrades ab, wobei die Zähne des flexiblen außenverzahnten Zahnrades an gegenüberliegenden Seiten umlaufend in und außer Eingriff mit den Zähnen des starren innenverzahnten Zahnrades gelangen. Aufgrund des Unterschiedes der Zähnezahlen kommt es zu einer Relativdrehung des radialflexiblen, außenverzahnten Zahnrades relativ zu dem starren, innenverzahnten Zahnrad, wenn der Wellengenerator rotiert wird. Der Wellengenerator muss nicht zwingend elliptisch ausgebildet sein. Vielmehr ist jede von der Kreisform abweichende Form möglich, die im Ergebnis den beschriebenen Eingriff der Verzahnung des flexiblen, außenverzahnten Zahnrades in die Verzahnung des innenverzahnten Zahnrades bewirkt. Auch ist es möglich, den Wellengenerator derart auszubilden, dass die Verzahnung des radialflexiblen, außenverzahnten Zahnrades an drei oder mehr Stellen in die Verzahnung des innenverzahnten Zahnrades eingreift.

Es gibt Spannungswellengetriebe in Ringbauweise, die zwei starre, jeweils im Querschnitt kreisförmige, innenverzahnte Zahnräder mit unterschiedlicher Zähneanzahl aufweisen, die auch Circularspline und Dynamicspline genannt werden.

Aus DE 11 2013 001 496 T5 ist ein Ringgetriebe bekannt, dessen radialflexibles Wälzlager als Nadellager ausgebildet ist.

Aus EP 3 492 775 B1 ist ein Spannungswellengetriebe mit einem Wälzlager bekannt, dessen Wälzkörper als hohle Walzen ausgebildet sind.

Aus WO 2020/234945 ist ein Spannungswellengetriebe mit einem Wälzlager bekannt, dessen Wälzkörper als zylindrische Rollen ausgebildet sind.

Aus DE 10 2017 106 712 A1 ist ein Spannungswellengetriebe bekannt, das einen Wellengenerator aufweist, der in einer radialflexiblen, außenverzahnten Hülse rotierbar gelagert ist, und das ein erstes starres, innenverzahntes Hohlrad aufweist, dessen Verzahnung mit der Außenverzahnung der radialflexiblen, außenverzahnten Hülse in Zahneingriff steht und ein zweites starres, innenverzahntes Hohlrad aufweist, dessen Verzahnung ebenfalls mit der Außenverzahnung der radialflexiblen, außenverzahnten Hülse in Zahneingriff steht. Das Spannungswellengetriebe zeichnet sich dadurch aus, dass der Wellengenerator mittels eines einzigen radialflexiblen Wälzlagers relativ zu der radialflexiblen, außenverzahnten Hülse rotierbar gelagert ist, das eine erste Wälzkörperreihe mit ersten Wälzkugeln und wenigstens eine axial zu der ersten Wälzkörperreihe versetzte, zweite Wälzkörperreihe mit zweiten Wälzkugeln aufweist.

Aus EP 2 676 049 B1 ist ein Spannungswellengetriebe bekannt, dessen radialflexibles Wälzlager zwei Reihen von Wälzkörpern aufweist, wobei die Wälzkörper in axialer Richtung überlappen.

Aus DE 10 2018 123 915 A1 ist ein Wellgetriebe mit einem Wellengenerator, einem radial verformbaren und flexible Ringelement, das eine Außenverzahnung aufweist, und mit einem starren Ringelement, das eine Innenverzahnung aufweist, wobei die Außenverzahnung des flexiblen Ringelements zur Übertragung eines Drehmoments an mindestens einem Zahneingriffsbereich mit der Innenverzahnung des starren Ringelements im Zahneingriff steht und wobei der Wellengenerator ein unrund ausgebildetes Lagerelement, bestehend aus einem Innenring, einem Außenring sowie radial dazwischen angeordneten Wälzkörper umfasst. Das Lagerelement ragt zumindest teilweise in das flexible Ringelement axial hinein. Der Innenring ist drehfest mit einer Welle und der Außenring ist drehfest mit dem flexiblen Ringelement verbunden. Das Lagerelement ist als Pendelrollenlager ausgebildet. Es wird in DE 10 2018 123 915 A1 als Vorteil herausgestellt, dass höhere Lasten übertragbar sein sollen und die radiale Steifigkeit des Wellengenerators sowie die Torsionssteifigkeit des gesamten Wellgetriebes und außerdem die Präzision des Wellgetriebes verbessert würde. Es hat sich allerdings gezeigt, dass derartige Wellgetriebe eine verringerte Lebensdauer aufweisen.

Aus US 4 929 098 A ist ein selbstzentrierendes Wälzlager bekannt.

Aus US 2 595 121 A ist ein reibungsarmes Wälzlager mit einer Schale und einem Konus, die einander gegenüberliegende gekrümmte Oberflächen aufweisen, und einer Vielzahl von Rollen, deren Oberflächen so gekrümmt sind, dass sie zu den einander gegenüberliegenden gekrümmten Oberflächen der Schale und des Konus passen und an diesen anliegen, bekannt.

Aus US 2011 274382 A1 ist eine leichtgewichtige Hybridlageranordnung und ein Verfahren zu ihrer Herstellung bekannt. Die Hybridlageranordnung umfasst einen Innenring und einen radial vom Innenring beabstandeten Außenring. Einer oder beide, der Innenring und der Außenring, haben eine konvexe Lageroberfläche. Zwischen dem Innenring und dem Außenring ist eine Vielzahl von keramischen Rollenelementen angeordnet. Die keramischen Rollenelemente haben eine konkave Lagerfläche, die an der konvexen Lagerfläche oder den konvexen Lagerflächen anliegt. Dadurch werden u. a. axiale Fluchtungsfehler der Laufringe zueinander ausgeglichen.

Aus DE 10 2019 117 853 A1 ist eine Getriebevorrichtung des Biegeeingriffstyps bekannt, in der ein zweireihiges Wälzlager mit balligen Walzen für ein Wellengeneratorlager verwendet wird. Die balligen Walzen rollen auf Rollflächen ab, die in einer Querschnittsebene längs der Axialrichtung gerade verlaufen, wobei Abstandssicherungselemente vorgesehen sind, um einen Schräglauf der Walzen zu unterdrücken.

Es ist daher die Aufgabe der vorliegenden Erfindung ein Spannungswellengetriebe anzugeben, das bei gleicher Baugröße eine größere Leistungsfähigkeit und Lebensdauer aufweist.

Die Aufgabe wird durch ein Spannungswellengetriebe nach Anspruch 1 gelöst, das dadurch gekennzeichnet ist, dass die Laufflächen in einer Querschnittsebene längs der Axialrichtung gekrümmt sind und in der Querschnittsebene längs der Axialrichtung eine geringere Krümmung (beispielsweise bei einer kreisbogenförmigen Krümmung einen größeren Krümmungsradius) aufweisen, als die Wälzflächen der Wälzkörper.

In erfindungsgemäßer Weise wurde erkannt, dass insbesondere die Lebensdauer und Belastbarkeit des radialflexiblen Wälzlagers zwei wichtige Faktoren für die Lebensdauer und Leistungsfähigkeit eines Spannungswellengetriebes sind. Das radialflexible Wälzlager hat, wie eingangs geschildert, die Aufgabe, die Generatorfunktion umlaufend auf den Flexspline zu übertragen und für den Zahneingriff zu sorgen. Neben den radialen Zahneingriffskräften wird das radialflexible Wälzlager noch durch die ovale, insbesondere elliptische Vordeformation, und die sogenannten Coningkräfte im Topf- oder Hutgetriebe belastet. Das bei einem Spannungswellengetriebe in Topfbauweise oder in Hutbauweise auftretende "Coning" des Flexsplines ist darauf zurückzuführen, dass das die Verzahnung aufweisende Ende des Flextopfes (bzw. Flexhutes) in der radialen Ebene der Hochachse des Wellengenerators radial nach außen gebogen wird, mit der Folge, dass die in der Ebene der Hochachse liegenden Teile der Flextopfwandung zum Topfboden hin (bzw. zur Hutkrempe hin) konisch aufeinander zu verlaufen, und dass das die Verzahnung aufweisende Ende des Flextopfes in der radialen Ebene der Niedrigachse des Wellengenerators radial nach innen gebogen wird, mit der Folge, dass die in der Ebene der Niedrigachse liegenden Teile der Flextopfwandung zum Topfboden hin (bzw. zur Hutkrempe hin) konisch auseinander laufen. In erfindungsgemäßer Weise wurde erkannt, dass die Druckwinkel im Wälzlager durch das Coning nachteiliger Weise fortlaufend verändert werden und insbesondere axiale Kräfte induziert werden. Insbesondere durch das Coning kommt es in nachteiliger Weise zum Kantentragen und Kantenpressungen, was sich negativ auf die Belastbarkeit und die Lebensdauer auswirkt. Auch bei Ringgetrieben kommt es auf Grund der Verformung des Flexsplines im Betrieb zu ähnlichen nachteiligen Belastungen des radialflexiblen Wälzlagers.

Ein Nachteil von Kugellagern resultiert (unabhängig von der Bauform eines herkömmlichen Spannungswellengetriebes) aus einer nachteiligen Kugelkinematik. Eine Kugel kann sich im Kugellager in alle drei Raumrichtungen bewegen und erfährt durch den Punktkontakt mit den Laufflächen neben einem reinen Abrollen an den Laufflächen auch ein Gleiten und ein Rutschen. Dieser Effekt verstärkt sich durch sich fortlaufend ändernde Druckwinkel ganz besonders und beeinflusst das sogenannte Spin/Roll-Verhältnis nachteilig, was erheblich für Verschleißerscheinungen und eine diesbezüglich nachteilige Erwärmung des Wälzlagers verantwortlich ist. Vor allem wenn nachteilige Schmierstoffbedingungen vorliegen, kann dies zu exponentiellem Verschleiß führen und das Wälzlager frühzeitig ausfallen lassen, beispielsweise weil das Lagerspiel zu groß wird und gestörte Zahneingriffsverhältnisse resultieren.

In erfindungsgemäßer Weise wurde erkannt, dass die Lebensdauer des radialflexiblen Wälzlagers nicht einfach dadurch erhöht werden kann, dass durch die Verwendung von Tonnenrollen statt Kugeln dauerhaft eine größere Kontaktfläche zwischen den Wälzkörpern und den Laufflächen geschaffen wird. Es hat sich gezeigt, dass es beispielsweise auch bei dem aus DE 10 2018 123 915 A1 bekannten Spannungswellengetriebe zwangsläufig zu einem Kantentragen und zu Kantenpressungen kommt, was sich negativ auf die Belastbarkeit und die Lebensdauer auswirkt. Tatsächlich ist es so, dass durch die Verwendung von balligen Tonnenrollen als Wälzkörper zwar eine größere Kontaktfläche zwischen den Wälzkörpern und den Laufflächen erreicht wird, allerdings kommt es durch die oben beschrieben Kräfte und die oben beschriebene Kinematik im Betrieb des Spannungswellengetriebes, insbesondere durch das Coning, zu einer Verlagerung der Druckbelastung von der Mitte der Wälzkörper weg und hin zu den axialen Enden der Wälzkörper, so dass im Ergebnis ganz hauptsächlich die endseitigen Kanten der Wälzkörper den Hauptteil der Last tragen, was dort zu einer hohen Hertzschen Pressung und zu einem vorzeitigen Verschleiß der Wälzkörper und der durch die endseitigen Kanten der Wälzkörper belasteten Bereiche der Laufflächen führt. Der Effekt des Kantentragens und der Kantenpressung ist umso größer, je höher die Drehmomentbelastung des Spannungswellengetriebes ist.

In erfindungsgemäßer Weise wurde darüber hinaus zunächst erkannt, dass eine erhöhte Lebensdauer und Belastbarkeit des radialflexiblen Wälzlagers durchaus erreicht werden kann, indem Wälzkörper verwendet werden, die keine Kugeln sind und deren Wälzflächen über ihre axiale Länge keinen zylindrischen Anteil aufweisen, wobei die Laufflächen gekrümmt sind und in einer Querschnittsebene längs der Axialrichtung eine geringere Krümmung aufweisen, als die Wälzflächen der Wälzkörper. Auf diese Weise wird vorteilhaft zunächst ausgenutzt, dass bei einer über der Leerlaufbelastung liegenden Drehmomentbelastung des Spannungswellengetriebes einpunktförmiger Kontakt der Wälzkörper zu den Laufflächen des Innen- und Außenrings zu Gunsten eines Linienkontaktes vermieden ist, wobei allerdings gleichzeitig auch eine (wie oben beschrieben nachteiliges) Kantentragen und die daraus resultierende Kantenpressung vermieden werden müssen. Letzteres wird erfindungsgemäß dadurch erreicht, dass die Laufflächen in einer Querschnittsebene längs der Axialrichtung eine geringere Krümmung aufweisen, als die Wälzflächen der Wälzkörper, was bewirkt, dass die endseitigen Kanten der Wälzkörper von den Laufflächen beabstandet sind und sich die Laufflächen bei zunehmender Drehmomentbelastung des Spannungswellengetriebes aufgrund der durch die zunehmende Belastung auftretenden Kräfte ausgehend von der Mitte der Wälzkörper in Richtung auf deren Enden axial zunehmend an die Wälzkörper anschmiegen.

Es hat sich gezeigt, dass dieser Effekt nur dann erzielbar ist, wenn die Laufflächen in einer Querschnittsebene längs der Axialrichtung gekrümmt sind. Wenn die Laufflächen in einer Querschnittsebene längs der Axialrichtung gerade verlaufen, wird allein durch die Verwendung von Wälzkörpern, die keine Kugeln sind und deren Wälzflächen über ihre axiale Länge keinen zylindrischen Anteil aufweisen, kein messbarer Vorteil im Vergleich zu der Verwendung von Kugeln erzielt.

Bei einer besonderen Ausführung stehen die Wälzkörper mit den Laufflächen bei einer Leerlaufbelastung des Spannungswellengetriebes in einem Punktkontakt. Eine solche Ausführung ist bei Leerlaufbelastung besonders leichtgängig. Alternativ ist es jedoch auch möglich, dass die Wälzkörper mit den Laufflächen bei einer Leerlaufbelastung des Spannungswellengetriebes bereits in einem Linienkontakt stehen.

Bei einer ganz besonders vorteilhaften Ausführung des erfindungsgemäßen Spannungswellengetriebes sind die Krümmungen der Wälzkörper und der Laufflächen (in einer Querschnittsebene längs der Axialrichtung) derart gewählt, dass die Wälzkörper bei einer Drehmomentbelastung des Spannungswellengetriebes über der Leerlaufbelastung mit den Laufflächen jeweils entlang einer Kontaktlinie in Linienkontakt stehen, wobei die Länge der Kontaktlinie mit zunehmender Drehmomentbelastung zunimmt. Auf diese Weise ist vorteilhaft erreicht, dass sich die Laufflächen bei zunehmender Drehmomentbelastung des Spannungswellengetriebes an die Wälzkörper anschmiegen und sich die auf die Wälzkörper und die Laufflächen einwirkenden Presskräfte zunehmend auf eine größere Fläche verteilen. Insbesondere können die Krümmungen der Wälzkörper und der Laufflächen in einer Querschnittsebene längs der Axialrichtung (vorzugsweise unter quantitativer Berücksichtigung der oben beschriebenen Eigenschaften der übrigen Komponenten des Spannungswellengetriebes, insbesondere des Conings) derart gewählt sein, dass eine Verdopplung der Drehmomentbelastung des Spannungswellengetriebes eine Veränderung der Hertzschen Pressung zwischen den Wälzkörpern und den Laufflächen um einen Faktor k bewirkt, wobei der Faktor k vorzugsweise kleiner als 1,8, insbesondere kleiner als 1,5 ist. Hierbei ist es nicht ausgeschlossen die Krümmungen so zu wählen, dass die Hertzschen Pressung bei einer Erhöhung der Drehmomentbelastung des Spannungswellengetriebes sogar abnimmt. Insbesondere kann das erfindungsgemäße Spannungswellengetriebe vorteilhaft derart ausgelegt sein, dass der Faktor k im Bereich von 1,0 bis 1,7, insbesondere im Bereich von 1,0 bis 1,5, liegt. Bei einer Ausführung, bei der die Wälzflächen der Wälzkörper und der Laufflächen jeweils die Form eines Rotationskörpers aufweisen, dessen erzeugende Kurve ein Wälzkörper-Kreissegment ist, kann dies beispielsweise dadurch erreicht werden, dass das Verhältnis des Radius des Laufflächen-Kreissegments zu dem Radius des Wälzkörper-Kreissegments im Bereich von 1,01 bis 1,5 liegt.

Wie weiter unten noch im Detail beschrieben ist, ist die Form der Laufflächen in einer Querschnittsebene längs der Axialrichtung nicht auf einen Kreisabschnitt beschränkt. Vielmehr sind ganz unterschiedliche Formen möglich. Gleiches gilt analog auch für die Wälzkörper. Allerdings ist die nachfolgende exemplarische Betrachtung eines Spannungswellengetriebes, bei dem die Wälzflächen der Wälzkörper jeweils die Form eines Rotationskörpers aufweisen, dessen erzeugende Kurve ein Wälzkörper-Kreissegment ist, und bei dem jede Lauffläche die Form eines Rotationskörpers aufweist, dessen erzeugende Kurve ein Laufflächen-Kreissegment ist, aufschlussreich auch im Hinblick auf andere mögliche Formen der Wälzkörper und Laufflächen.

Es hat sich beispielsweise gezeigt, dass es ganz besonders vorteilhaft ist, wenn der Radius des Wälzkörper-Kreissegments im Bereich des 0,3-fachen bis 2,0-fachen des Teilkreisdurchmessers der Flexsplineverzahnung liegt. Insbesondere kann vorteilhaft vorgesehen sein, dass der Radius des Wälzkörper-Kreissegments im Bereich des 0,3-fachen bis 1,5-fachen oder im Bereich des 0,7-fachen bis 1,3 oder im Bereich des 0,9-fachen bis fachen bis 1,18-fachen oder im Bereich des 1,0-fachen bis 1,08-fachen des Teilkreisdurchmessers der Flexsplineverzahnung beträgt.

Alternativ oder zusätzlich kann vorteilhaft vorgesehen sein, dass der Radius des Laufflächen-Kreissegments im Bereich des 0,3-fachen bis 2,1-fachen des Teilkreisdurchmessers der Flexsplineverzahnung liegt. Insbesondere kann der Radius des Laufflächen-Kreissegments im Bereich des 0,4-fachen bis 1,6-fachen oder im Bereich des 0,95-fachen bis 1,23-fachen oder im Bereich des 1,04-fachen bis 1,12-fachen des Teilkreisdurchmessers der Flexsplineverzahnung liegen.

Alternativ oder zusätzlich kann, wie bereits erwähnt, außerdem vorteilhaft vorgesehen sein, dass das Verhältnis des Radius des Laufflächen-Kreissegments zu dem Radius des Wälzkörper-Kreissegments im Bereich von 1,01 bis 1,5 liegt.

Beispielsweise kann der Radius des Wälzkörper-Kreissegments bei einem erfindungsgemäßen Spannungswellengetriebe, dessen Flexsplineverzahnung einen Teilkreisdurchmesser von 91 mm aufweist, vorteilhaft 95 mm betragen. Hierbei kann der Radius des inneren Laufflächen-Kreissegments 95,0 mm und der Radius des äußeren Laufflächen-Kreissegments 95,3 mm betragen.

Es ist grundsätzlich vorteilhaft möglich, dass die innere Lauffläche (abgesehen von der einander entgegengesetzten Ausrichtung) dieselbe Krümmung aufweist, wie die äußere Lauffläche. Bei einer ganz besonders vorteilhaften Ausführung weist die innere Lauffläche in einer Querschnittsebene längs der Axialrichtung eine stärkere Krümmung (bei einer kreisbogenförmigen Krümmung also einen kleineren Krümmungsradius) auf als die äußere Lauffläche in der Querschnittsebene längs der Axialrichtung. Beispielsweise kann vorteilhaft vorgesehen sein, dass die äußere Lauffläche die Form eines Rotationskörpers aufweist, dessen erzeugende Kurve ein erstes Laufflächen-Kreissegment ist und die innere Lauffläche die Form eines Rotationskörpers aufweist, dessen erzeugende Kurve ein zweites Laufflächen-Kreissegment ist, und dass das Verhältnis des Radius des ersten Laufflächen-Kreissegments zum Radius des zweiten Laufflächen-Kreissegments im Bereich von 0,9 bis 0,999, insbesondere im Bereich von 0,99 bis 0,999, liegt.

Hiervon ausgehend wurde außerdem erkannt, dass - je nach geplanter Anwendung und je nach Typ des Spannungswellengetriebes - ganz unterschiedliche Formen der Wälzkörper in besonders vorteilhafter Weise zum Einsatz kommen können. Insbesondere kann die Form der Wälzkörper und der Laufflächen beispielsweise derart gewählt werden, dass sich das radialflexible Wälzlager bei gleicher Belastung weniger erwärmt und dadurch einem geringeren Verschleiß unterliegt, während gleichzeitig ein Kippen des Wellengenerators relativ zu dem Flexspline ermöglicht ist.

Bei einer ganz besonders vorteilhaften Ausführung entspricht (bezogen auf die Querschnittsebenen längs der Axialrichtung) wenigstens ein, insbesondere mittlerer, Teil der Form der Wälzflächen der Wälzkörper der Form der Einhüllenden (im mathematischen Sinne) der durch das Coning verursachten Kurvenschar der Flexsplinewandung. Eine solche Ausführung ist im Hinblick auf die Erzielung einer langen Lebensdauer besonders vorteilhaft. Insbesondere kann vorteilhaft vorgesehen sein, dass wenigstens der Teil der Wälzflächen der Wälzkörper, der bei Nennbelastung oder bei einem vorgegebenen oder vorgebbaren Vielfachen der Nennbelastung in Kontakt mit den Laufflächen tritt, eine Form aufweist, die der Einhüllenden (im mathematischen Sinne) der durch das Coning verursachten Kurvenschar der Flexsplinewandung entspricht. Ganz allgemein kann vorgesehen sein, dass in einer Querschnittsebene längs der Axialrichtung die Form der Wälzflächen der Wälzkörper der Form der Einhüllenden (im mathematischen Sinne) der durch das Coning verursachten Kurvenschar der Flexsplinewandung entspricht.

Das erfindungsgemäße Spannungswellengetriebe hat zum Einen den besonderen Vorteil, dass bei gleichen Hertzschen Pressungen zwischen den Wälzkörpern und den Laufflächen insgesamt eine höhere Belastbarkeit des radialflexiblen Wälzlagers erreicht wird, wobei die Wälzkörper hierfür auf Grund des Linienkontaktes (anstelle eines Punktkontaktes) in ganz besonders vorteilhafter Weise sogar eine kleinere radiale Ausdehnung aufweisen können. Hierdurch wird in ganz besonders vorteilhafter Weise ein reduzierter radialer Bauraumbedarf des radialflexiblen Wälzlagers erreicht.

Die Erfindung ermöglicht es beispielsweise, das erfindungsgemäße Spannungswellengetriebe bei gleicher Belastbarkeit kleiner auszubilden, als ein herkömmliches Spannungswellengetriebe.

Alternativ kann auf Grund des reduzierten radialen Bauraumbedarfs des radialflexiblen Wälzlagers beispielsweise der Durchgangsdurchmesser eines als Hohlwelle ausgebildeten Wellengenerators vergrößert werden. Ein vergrößerter Durchgangsdurchmesser des als Hohlwelle ausgebildeten Wellengenerators hat beispielsweise den Vorteil, dass mehr oder dickere elektrische Kabel hindurch verlegt werden können, was beispielsweise bei Roboter-, Lenkungs- und Fahrwerksanordnungen besonders vorteilhaft ist.

Auf Grund des oben erläuterten Vorteils, dass die Wälzkörper eine geringere radiale Ausdehnung aufweisen können, wird zusätzlich erreicht, dass bei gleicher radialer Größe des Wälzlagers eine größere Anzahl von Wälzkörpern vorhanden sein kann, was die Belastbarkeit zusätzlich erhöht, weil sich die auftretenden Kräfte auf eine größere Anzahl von Wälzkörpern verteilt. Hierbei ist es von besonderem Vorteil, wenn das Wälzlager eine gerade Anzahl von Wälzkörpern aufweist, weil hierdurch insgesamt eine symmetrische Belastung des Spannungswellengetriebes erreicht wird.

Wie bereits erwähnt ist es erfindungsgemäß möglich, das erfindungsgemäße Spannungswellengetriebe derart auszubilden, dass die Belastungen auf das radialflexible Wälzlager trotz gleicher Drehmomentbelastung und gleicher Baugröße gegenüber einem herkömmlichen Spannungswellengetriebe mit einem Kugellager reduziert sind. Das erfindungsgemäße Wälzlager des erfindungsgemäßen Spannungswellengetriebes läuft in diesem Fall kühler und die Schmierstoffbelastung durch erhöhte Temperaturen ist reduziert.

Alternativ ist es ohne negative Beeinflussung der Lebensdauer des Spannungswellengetriebes möglich, eine Drehmomentbelastung des Spannungswellengetriebes zuzulassen, die bei einem herkömmlichen Spannungswellengetriebe gleicher Baugröße unzulässig ist.

In besonders vorteilhafter Weise induziert das Wälzlager allenfalls nur sehr kleine axiale Kräfte in das System, weil der Radius der Laufflächen und der Wälzflächen (im Axialquerschnitt) größer ist als bei einem Kugellager mit Wälzkugeln.

Das erfindungsgemäße Spannungswellengetriebe hat den ganz besonderen Vorteil, dass bei gleicher Baugröße das Gewicht des Wälzlagers und vor allem das der Wälzkörper gegenüber dem Gewicht des Wälzlagers herkömmlicher Spannungswellengetriebe reduziert ist, was höhere Drehzahlen ermöglicht und die Massenträgheit verringert. Darüber hinaus wird die Übertragungsgenauigkeit des Spannungswellengetriebes durch die erhöhte Anzahl an Wälzkörpern verbessert, da mehr Stützstellen in den Zahneingriffsbereichen vorliegen.

Ganz allgemein kann, wie bereits erwähnt, vorteilhaft vorgesehen sein, dass die Wälzflächen der Wälzkörper jeweils als eine Mantelfläche eines Abschnitts eines Rotationskörpers (im mathematischen Sinne) ausgebildet sind, wobei die Erzeugende eine beliebige Kurve sein kann, außer einer zur Rotationsachse senkrechten Strecke (was einen Kreiszylinder ergäbe) oder eines mit seinen Enden unmittelbar an der Rotationsachse anliegenden Halbkreisbogens (was eine Kugel ergäbe).

Ein Rotationskörper ist in der Geometrie ein mathematischer Körper, dessen Oberfläche durch Rotation einer erzeugenden Kurve (Erzeugende) um eine Rotationsachse gebildet wird, wobei die erzeugende Kurve und die Rotationsachse stets in einer Ebene gemeinsamen liegen.

Insbesondere kann vorteilhaft vorgesehen sein, dass die Wälzflächen der Wälzkörper jeweils die Form eines Rotationskörpers aufweisen, dessen erzeugende Kurve ein Kreissegment ist, insbesondere ein Kreissegment, das kürzer ist als ein Vierteilkreis oder ein Achtelkreis. Es kann auch vorgesehen sein, dass die Wälzkörper jeweils als Rotationsellipsoid oder als Abschnitt eines Rotationsellipsoids ausgebildet sind und/oder dass die Wälzflächen der Wälzkörper jeweils als eine Mantelfläche eines Abschnitts eines Rotationsellipsoids ausgebildet sind.

Bei einer besonderen Ausführung weisen die Wälzkörper und/oder die Wälzflächen der Wälzkörper eine synklastische Form auf. Insbesondere können die Wälzkörper und/oder die Wälzflächen der Wälzkörper ballig ausgebildet sein.

Alternativ ist es auch möglich, dass die Wälzflächen der Wälzkörper eine antiklastische Form aufweisen. Beispielsweise können die Wälzkörper und/oder die Wälzflächen der Wälzkörper vorteilhaft tailliert ausgebildet sein. Beispielsweise kann vorteilhaft vorgesehen sein, dass die Wälzkörper jeweils als Rotationshyperboloid oder als Abschnitt eines Rotationshyperboloids ausgebildet sind und/oder dass die Wälzflächen der Wälzkörper jeweils als eine Mantelfläche eines Abschnitts eines Rotationshyperboloids ausgebildet sind.

Vorzugsweise sind alle Wälzkörper des radialflexiblen Wälzlagers gleich ausgebildet.

Die Wälzkörper können insbesondere in einem Wälzkörperkäfig angeordnet sein. Es ist auch möglich, zwischen benachbarten Wälzkörpern Abstandselemente, beispielsweise aus Kunststoff, einzufügen, die die Wälzkörper auf Abstand zueinander halten. Insbesondere können die Abstandselemente eine zu den Wälzkörpern komplementäre Form aufweisen und flächig an den Wälzkörpern anliegen.

Bei einer besonderen Ausführung sind die Wälzkörper bezüglich einer zur Axialrichtung senkrechten Ebene spiegelsymmetrisch ausgebildet. Es ist, je nach Anwendungsfall, jedoch auch möglich, die Wälzkörper unsymmetrisch auszubilden.

In besonders vorteilhafter Weise kann die axiale Länge der Wälzkörper und/oder der Wälzflächen größer sein, als deren größter Durchmesser. Eine solche Ausführung ist besonders kompakt ausbildbar.

Insbesondere können die axialen Längen der Lagerringe und/oder der Wälzflächen gleich sein. Es ist jedoch auch möglich, dass der Lagerinnenring axial länger ist als der Lageraußenring oder dass der Lageraußenring axial länger ist als der Lagerinnenring. Alternativ oder zusätzlich ist es auch möglich, dass eine der Laufflächen axial länger ist als die andere.

Vorzugsweise sind die radialen Materialdicken der Lagerringe bei dem radialflexiblen Wälzlager derart gewählt, dass eine fortlaufende elastische Deformation während der Rotation des Wellengenerators genauso wie bei herkömmlichen Spannungswellengetrieben möglich ist.

Erfindungsgemäß weist das radialflexible Wälzlager zwei Laufflächen auf, zwischen denen die Wälzkörper angeordnet sind und auf denen die Wälzkörper abrollen. Insbesondere kann vorteilhaft vorgesehen sein, dass die Laufflächen in einer in Axialrichtung verlaufenden Querschnittsebene zueinander eine spiegelsymmetrische Form aufweisen.

Das radialflexible Wälzlager kann derart ausgebildet sein, dass keine Axialsicherung für die Wälzkörper erforderlich ist. Insbesondere kann vorteilhaft vorgesehen sein, dass die Wälzkörper axial ausschließlich durch ihren Kontakt mit den Laufflächen gesichert sind.

Die Querschnittsform der Laufflächen kann (bei abweichender Größe) vorteilhaft der Querschnittsform der Wälzkörper entsprechen.

Es kann vorteilhaft vorgesehen sein, dass die Wälzfläche jedes Wälzkörpers die Form eines Rotationskörpers (im mathematischen Sinne) aufweist, dessen erzeugende Kurve beispielsweise ein Kreissegment ist. In diesem Fall können die Laufflächen ebenfalls als Rotationskörper (im mathematischen Sinne) ausgebildet sein, deren erzeugende Kurve beispielsweise jeweils ein Kreissegment (mit vorzugsweise geringfügig größerem Radius) ist. Allerdings sind auch andere erzeugende Kurven, beispielsweise Abschnitte eines Kegelschnitts (Ellipse, Parabel, Hyperbel), möglich. Gleiches gilt für die Laufflächen.

Das radialflexible Wälzlager kann einen Lagerinnenring aufweisen, der auf seiner Außenseite eine der Laufflächen aufweist. Das radialflexible Wälzlager kann einen Lageaußenring aufweisen, der auf seiner Innenseite eine der Laufflächen für die Wälzflächen der Wälzkörper aufweist. Es ist allerdings auch möglich, auf wenigsten einen der Ringe (Innenring und/oder Außenring) zu verzichten, indem der Wellengenerator eine der Laufflächen aufweist und/oder indem der Flexspline eine der Laufflächen aufweist.

Wie bereits erwähnt, kann der Wellengenerator vorteilhaft, insbesondere wenn das Spannungswellengetriebe als Ringgetriebe oder als Hutgetriebe ausgebildet ist, als Hohlwelle ausgebildet sein. Dies ermöglicht es beispielsweise, andere Wellen oder elektrische Kabel durch den Wellengenerator hindurch legen zu können.

Vorzugsweise weist der Wellengenerator einen Lagersitz für das radialflexible Wälzlager auf. Der Lagersitz kann insbesondere als gerader Zylinder mit einer von einer Kreisscheibe verschiedenen Grundform ausgebildet sein.

Bei einer besonderen Ausführung und nach einem eigenständigen Erfindungsgedanken ist der Wellengenerator in der Weise ausgebildet, dass er mehrere auf dem Innenumfang des Flexsplines abrollende Rollen aufweist, wobei jede der Rollen mittels eines Wälzlagers an einem rotierenden Träger gelagert ist, das mehrere Wälzkörper aufweist, die keine Kugeln sind und deren Wälzflächen über ihre axiale Länge keinen zylindrischen Anteil aufweisen. Insbesondere kann ein solcher Wellengenerator als Two-Roller oder als Three-Roller ausgebildet sein.

Hinsichtlich der Bauform des erfindungsgemäßen Spannungswellengetriebes gibt es keine grundsätzlichen Beschränkungen. Das erfindungsgemäße Spannungswellengetriebe kann vorteilhaft als Topfgetriebe, als Hutgetriebe oder als Ringgetriebe ausgebildet sein.

Das erfindungsgemäße Spannungswellengetriebe kann in Innenläufer-Bauweise ausgebildet sein, bei der der Wellengenerator von dem Flexspline umgeben ist. Das erfindungsgemäße Spannungswellengetriebe kann alternativ auch in Außenläufer-Bauweise ausgebildet sein, bei der der Wellengenerator den Flexspline umgibt.

Ganz besonders vorteilhaft ist eine Ausführung, bei der der Wellengenerator mittels des radialflexiblen Wälzlagers relativ zu dem Flexspline kippbar gelagert ist. Ein solches Spannungswellengetriebe hat den Vorteil einer besonders großen Einbautoleranz, ohne dass hierfür zusätzliche Bauelemente, wie beispielsweise Kupplungen und/oder andere Ausgleichselemente, erforderlich sind.

Der Wellengenerator und/oder eine mit dem Wellengenerator unmittelbar verbundene Welle können ausschließlich mittels des radialflexiblen Wälzlagers gelagert sein. Auf diese Weise ist eine schwimmende Lagerung (relativ zu den übrigen Getriebebauteilen) möglich. Es ist jedoch auch möglich, dass der Wellengenerator und/oder eine mit dem Wellengenerator unmittelbar verbundene Welle zusätzlich an anderer Stelle rotierbar gelagert sind.

Erfindungsgemäß ist es möglich, die übrigen Komponenten des erfindungsgemäßen Spannungswellengetriebes außer dem radialflexiblen Wälzlager in der üblichen Weise, insbesondere mit den üblichen Dimensionen und aus den üblichen Materialien, herzustellen. Vorzugsweise sind die Komponenten des Spannungswellengetriebes, insbesondere das radialflexible Wälzlagers und/oder der Flexspline und/oder der Circularspline, aus Stahl hergestellt.

Das radialflexible Wälzlager des erfindungsgemäßen Spannungswellengetriebes kann vorteilhaft als einreihiges Wälzlager ausgebildet sein. Es ist jedoch auch möglich, das radialflexible Wälzlager des erfindungsgemäßen Spannungswellengetriebes als mehrreihiges Wälzlager, insbesondere zweireihiges Wälzlager, auszubilden.

Von ganz besonderem Vorteil ist ein Roboter, insbesondere ein Industrieroboter, der wenigstens ein erfindungsgemäßes Spannungswellengetriebe beinhaltet. Insbesondere kann das erfindungsgemäße Spannungswellengetriebe in einem Robotergelenk eingesetzt werden. Das Robotergelenk kann durch die Verwendung des erfindungsgemäßen Spannungswellengetriebes für größere Belastungen ausgelegt werden als mit einem herkömmlichen Spannungswellengetriebe.

Von ganz besonderem Vorteil ist ein Fahrzeug, das wenigstens ein erfindungsgemäßes Spannungswellengetriebe aufweist, oder eine Fahrzeugkomponente, die wenigstens ein erfindungsgemäßes Spannungswellengetriebe aufweist.

Von ganz besonderem Vorteil ist ein Fahrwerk, insbesondere ein aktives Fahrwerk für ein Kraftfahrzeug, das wenigstens ein erfindungsgemäßes Spannungswellengetriebe aufweist. Ein ganz besonderer Vorteil ist es hierbei, dass von dem bei einem Fahrzeug ohnehin nur begrenzt zur Verfügung stehenden Bauraum weniger benötigt wird.

Von ganz besonderem Vorteil ist eine Lenkung, insbesondere PKW-Lenkung oder LKW-Lenkung, die wenigstens ein erfindungsgemäßes Spannungswellengetriebe aufweist. Die Lenkung kann insbesondere eine Servolenkung und/oder eine Überlagerungslenkung sein.

Die Axialrichtung eines Spannungswellengetriebes, insbesondere auch des erfindungsgemäßen Spannungswellengetriebes, ist die Richtung entlang der sich die Rotationsmittelachse des Antriebsbauteils und/oder das Abtriebsbauteils erstreckt. Beispielsweise kann der Wellengenerator als Antriebsbauteil fungieren, während der Flexspline als Abtriebsbauteil fungiert.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Spannungswellengetriebes,
- Fig. 2: ein zweites Ausführungsbeispiel eines erfindungsgemäßen Spannungswellengetriebes,
- Fig. 3: ein drittes Ausführungsbeispiel eines erfindungsgemäßen Spannungswellengetriebes,
- Fig. 4: ein viertes Ausführungsbeispiel eines erfindungsgemäßen Spannungswellengetriebes,
- Fig. 5: ein fünftes Ausführungsbeispiel eines erfindungsgemäßen Spannungswellengetriebes,
- Fig. 6: ein sechstes Ausführungsbeispiel eines erfindungsgemäßen Spannungswellengetriebes,
- Fig. 7: ein siebtes Ausführungsbeispiel eines erfindungsgemäßen Spannungswellengetriebes,
- Fig. 8: ein achtes Ausführungsbeispiel eines erfindungsgemäßen Spannungswellengetriebes,
- Fig. 9: ein Ausführungsbeispiel eines Wälzkörpers für ein erfindungsgemäßes Spannungswellengetriebe in einer Seitenansicht,
- Fig. 10: das Ausführungsbeispiel eines Wälzkörpers für ein erfindungsgemäßes Spannungswellengetriebe in einer Draufsicht in Axialrichtung,
- Fig. 11: ein weiteres Ausführungsbeispiel eines Wälzkörpers für ein erfindungsgemäßes Spannungswellengetriebe in einer Seitenansicht,
- Fig. 12: das weitere Ausführungsbeispiel eines Wälzkörpers für ein erfindungsgemäßes Spannungswellengetriebe in einer Draufsicht in Axialrichtung,
- Fig. 13: ein anderes Ausführungsbeispiel eines Wälzkörpers für ein erfindungsgemäßes Spannungswellengetriebe in einer Seitenansicht,
- Fig. 14: das andere Ausführungsbeispiel eines Wälzkörpers für ein erfindungsgemäßes Spannungswellengetriebe in einer Draufsicht in Axialrichtung,
- Fig. 15: eine Detailansicht des Wälzlagers eines erfindungsgemäßen Spannungswellengetriebes in einer Querschnittsebene längs der Axialrichtung,
- Fig. 16: ein neuntes Ausführungsbeispiel eines erfindungsgemäßen Spannungswellengetriebes in einer Draufsicht in Axialrichtung,
- Fig. 17: eine Darstellung der Kontaktfläche zwischen dem jeweils höchstbelasteten Wälzkörper und einer Lauffläche des neunten Ausführungsbeispiels eines erfindungsgemäßen Spannungswellengetriebes bei Leerlaufbelastung,
- Fig. 18: eine Darstellung der Kontaktfläche zwischen dem jeweils höchstbelasteten Wälzkörper und einer Lauffläche des neunten Ausführungsbeispiels eines erfindungsgemäßen Spannungswellengetriebes bei einer Belastung mit dem Nenndrehmoment,
- Fig. 19: eine Darstellung der Kontaktfläche zwischen dem jeweils höchstbelasteten Wälzkörper und einer Lauffläche des neunten Ausführungsbeispiels eines erfindungsgemäßen Spannungswellengetriebes bei einer Belastung mit dem Doppelten des Nenndrehmoments, und
- Fig. 20: eine übertriebene Darstellung einer vorteilhaften Möglichkeit hinsichtlich der Form der Wälzflächen der Wälzkörper.

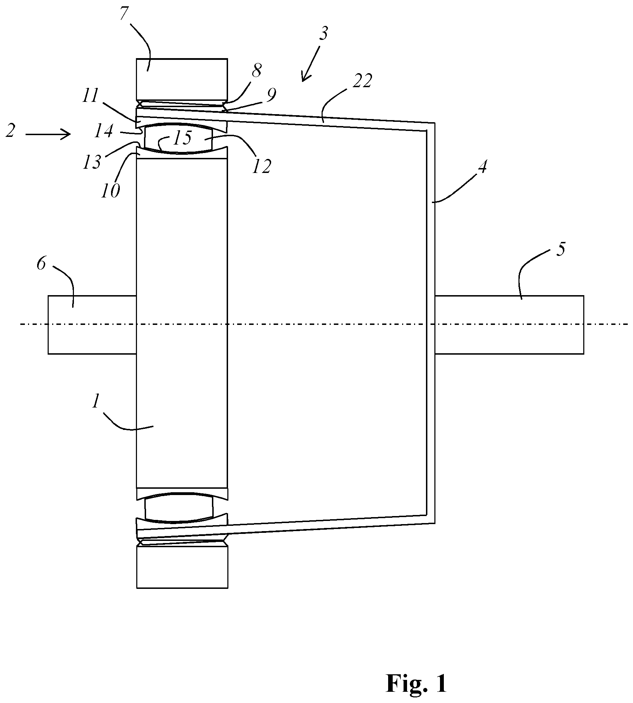

Fig. 1 zeigt ein Ausführungsbeispiel eines erfindungsgemäßen Spannungswellengetriebes mit einem Wellengenerator 1, der mittels eines radialflexiblen Wälzlagers 2 relativ zu einem Flexspline 3 rotierbar gelagert ist. Bei dem Flexspline 3 handelt es sich um einen Flextopf, der einen Flextopfboden 4 und eine Flexsplinewandung 22 aufweist. An den Flextopfboden 4 ist eine Abtriebswelle 5 angekoppelt. An den Wellengenerator 1 ist eine Antriebswelle 6 angekoppelt.

Das Spannungswellengetriebe weist darüber hinaus einen Circularspline 7 mit einer Innenverzahnung 8 auf.

Der Flexspline 3 weist an seinem dem Topfboden 4 abgewandten Ende eine umlaufende Außenverzahnung 9 auf, die in der radialen Ebene der Hochachse des Wellengenerators (die der Zeichenebene der Figur 1 entspricht) an zwei Stellen in die Innenverzahnung 8 des Circularsplines 7 eingreift.

Das radialflexible Wälzlager 2 weist einen Innenring 10 und einen Außenring 11 auf, zwischen denen mehrere Wälzkörper 12 angeordnet sind, die keine Kugeln sind und deren Wälzflächen 15 über ihre axiale Länge keinen zylindrischen Anteil aufweisen. Konkret sind die Wälzkörper 12 ballig ausgebildet.

Der Innenring 10 weist eine innere Lauffläche 13 auf. Der Außenring 11 weist eine äußere Lauffläche 14 auf, die mit den Wälzkörpern 12 in Kontakt stehen. Die Querschnittsform der Laufflächen 13, 14 entspricht hierfür der Querschnittsform der Wälzkörper 12. Die Laufflächen 13, 14 weisen in einer Querschnittsebene längs der Axialrichtung (entspricht der Zeichenebene) eine etwas geringere Krümmung auf, als die Wälzflächen 15 der Wälzkörper 12, was bewirkt, dass die endseitigen Kanten der Wälzkörper 12 von den Laufflächen 13, 14 beabstandet sind und sich die Laufflächen 13, 14 bei zunehmender Drehmomentbelastung des Spannungswellengetriebes ausgehend von der Mitte der Wälzkörper 12 in Richtung auf die Enden axial zunehmend an die Wälzkörper 12 anschmiegen.

Beispielsweise kann vorteilhaft vorgesehen sein, dass die Wälzfläche 15 jedes Wälzkörpers 12 die Form eines Rotationskörpers (im mathematischen Sinne) aufweist, dessen erzeugende Kurve ein Kreissegment ist. In diesem Fall können die Laufflächen ebenfalls als Rotationskörper (im mathematischen Sinne) ausgebildet sein, deren erzeugende Kurve jeweils ein Kreissegment mit etwas größerem Radius ist.

In der Figur 1 ist zu erkennen, dass die Flanken des Flexsplines 3 in der dargestellten Ebene der Hochachse des Wellengerators 1 von dem Topfboden 4 ausgehend konisch auseinander laufen, was als Coning bezeichnet wird. In der Figur 1 ist außerdem zu erkennen, dass sich das radialflexible Wälzlager 2 vorteilhaft an die durch Coning bedingte Form des Flexsplines 3 anpasst. Insbesondere lassen es die besondere Form der Wälzkörper 12 und des Innenrings 10 sowie des Außenrings 11 zu, dass der Außenring 11 sich verwinden und partiell relativ zum Innenring 10 kippen kann.

Das dargestellte Spannungswellengetriebe hat darüber hinaus den ganz besonderen Vorteil, dass ein axialer Winkelfehler des Wellengenerators 1 und der Antriebswelle 6 mittels des radialflexiblen Wälzlagers 2 ausgeglichen wird und nicht auf den Flexspline 3 und/oder den Circularspline 7 übertragen wird und nicht zu einer zusätzlichen Belastung des radialflexiblen Wälzlagers 2 führt. Insoweit hat das erfindungsgemäße Spannungswellengetriebe den Vorteil einer besonders großen Einbautoleranz.

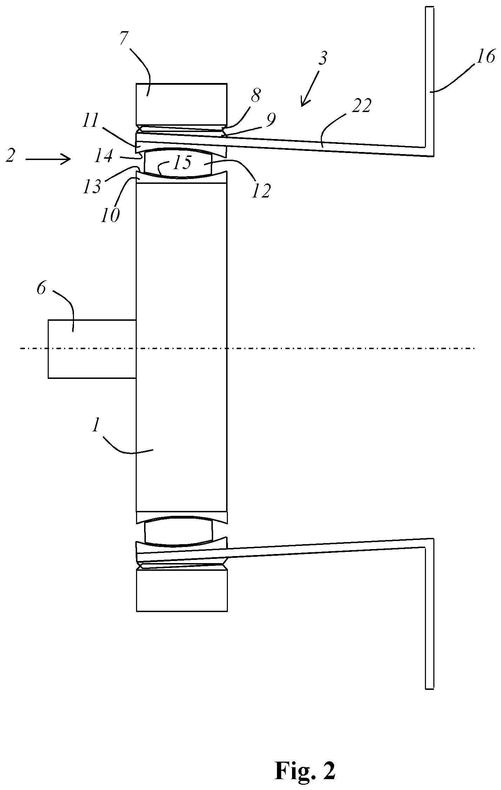

Figur 2 zeigt ein zweites Ausführungsbeispiel eines erfindungsgemäßen Spannungswellengetriebes, das im Gegensatz zu der in Figur 1 dargestellten Ausführung als Hutgetriebe ausgebildet ist. Der Flexspline 3 weist anstelle eines Flextopfbodens 4 eine nach außen gerichtete umlaufende Krempe 16 auf, die beispielweise als Flansch ausgebildet sein kann.

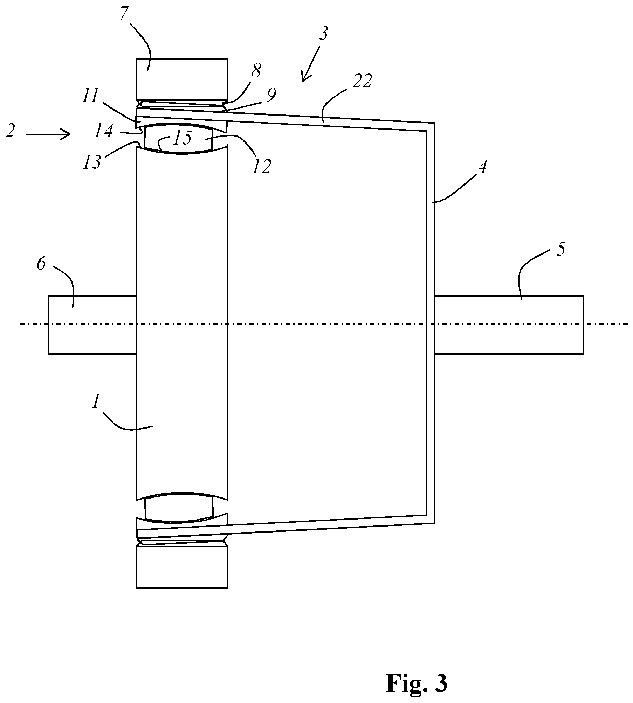

Figur 3 zeigt ein drittes Ausführungsbeispiel eines erfindungsgemäßen Spannungswellengetriebes. Bei diesem Ausführungsbeispiel weist der Wellengenerator 1 auf seinem Außenumfang die innere Lauffläche 13 auf. Ein Innenring 10 ist bei dieser Ausführung daher nicht vorhanden.

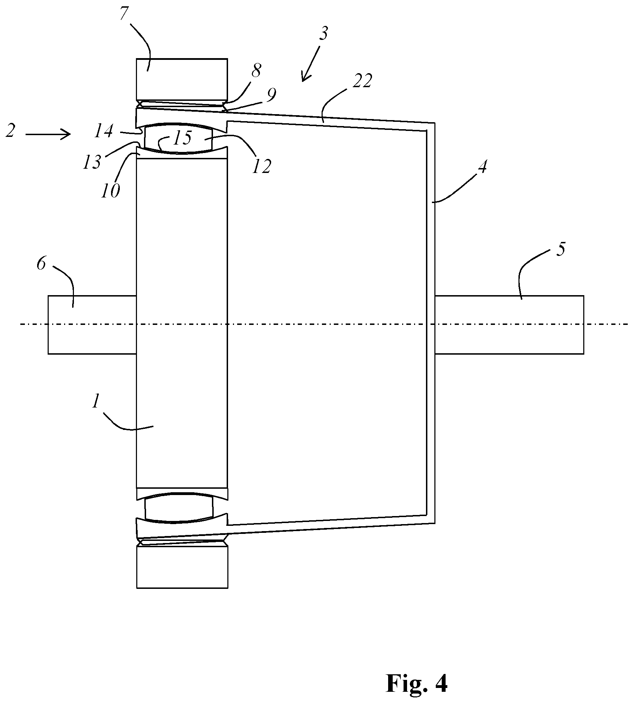

Figur 4 zeigt ein viertes Ausführungsbeispiel eines erfindungsgemäßen Spannungswellengetriebes. Bei dieser Ausführung weist der Flexspline 3 entlang seinem Innenumfang die äußere Lauffläche 14 auf. Ein Außenring 11 ist bei dieser Ausführung daher nicht vorhanden.

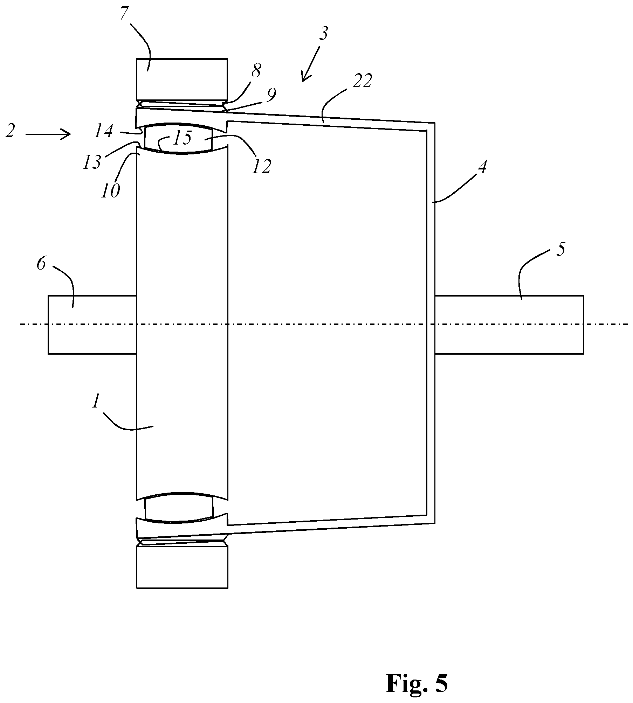

Figur 5 zeigt ein fünftes Ausführungsbeispiel eines erfindungsgemäßen Spannungswellengetriebes. Bei dieser Ausführung weist der Wellengenerator 1 die innere Lauffläche 13 auf, während der Flexspline 3 entlang seinem Innenumfang die äußere Lauffläche 14 aufweist. Bei diesem Ausführungsbeispiel ist weder ein Innenring 10 noch ein Außenring 11 vorhanden.

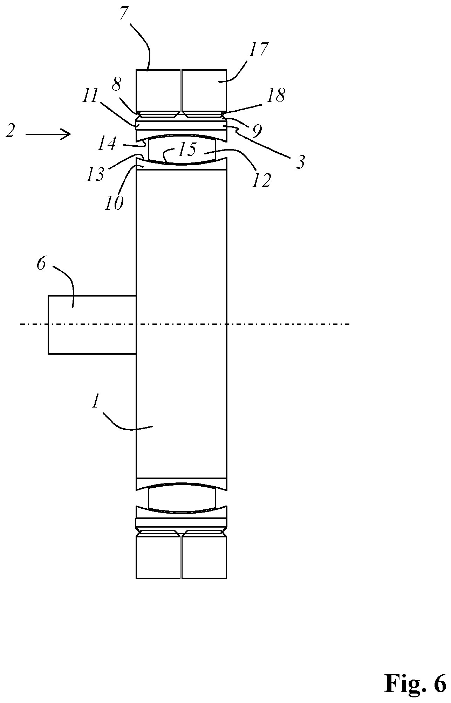

Figur 6 zeigt ein sechstes Ausführungsbeispiel eines erfindungsgemäßen Spannungswellengetriebes. Das Spannungswellengetriebe ist als Ringgetriebe ausgebildet, das neben einem Circularspline 7 einem Dynamicspline 17 mit einer weiteren Innenverzahnung 18 aufweist, die ebenfalls mit der Außenverzahnung 9 des Flexsplines 3 kämmt. Die Anzahl der Zähne der Innenverzahnung 8 des Circularsplines 7 unterscheidet sich von der Anzahl der Zähne der weiteren Innenverzahnung 18 des Dynamicsplines 17. Bei diesem Getriebe ist es ein ganz besonderer Vorteil, dass sich axiale Winkelabweichungen der Antriebswelle 6 und des Wellengenerators 1 aufgrund des erfindungsgemäßen radialflexiblen Wälzlagers nicht auf den Flexspline 3 und den Circularspline 7 sowie den Dynamicspline 17 übertragen und nicht zu einer zusätzlichen Belastung des radialflexiblen Wälzlagers 2 führen.

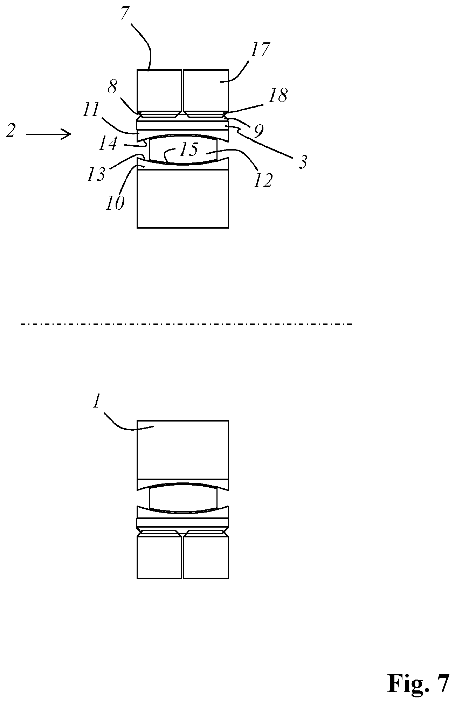

Figur 7 zeigt ein siebtes Ausführungsbeispiel eines erfindungsgemäßen Spannungswellengetriebes. Das Spannungswellengetriebe ist als Ringgetriebe mit einem Circularspline 7 und einem Dynamicspline 17 ausgebildet. Der Wellengenerator 1 ist als Hohlwelle ausgebildet.

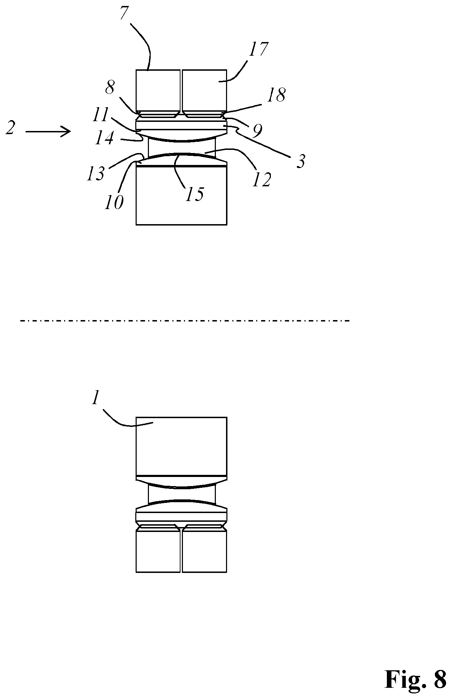

Figur 8 zeigt ein achtes Ausführungsbeispiel eines erfindungsgemäßen Spannungswellengetriebes. Bei diesem Ausführungsbeispiel sind die Wälzkörper 12 tailliert ausgebildet. Die Laufflächen 13, 14 sind entsprechend gegengeformt derart ausgebildet, dass jeweils ein Linienkontakt zwischen den Laufflächen 13, 14 und den Wälzflächen 15 der Wälzkörper 12 gewährleistet ist.

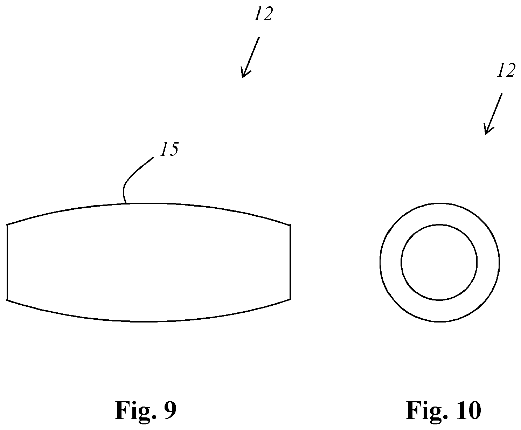

Die Figuren 9 und 10 zeigen in einer Seitansicht und in einer axialen Draufsicht eine mögliche Ausführung eines Wälzkörpers 12 für ein erfindungsgemäßes Spannungswellengetriebe. Der Wälzkörper 12 weist entlang seinem Umfang eine Wälzfläche 15 auf. Die Wälzfläche 15 kann im Querschnitt beispielsweise ein Kreissegment oder ein Ellipsensegment aufweisen.

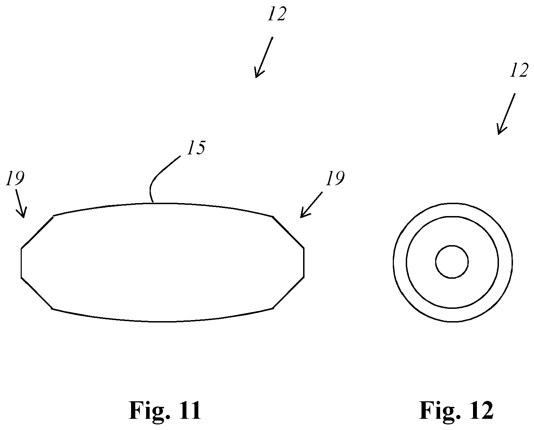

Die Figuren 11 und 12 zeigen ein anderes Ausführungsbeispiel eines möglichen Wälzkörpers. Der in den Figuren 11 und 12 dargestellte Wälzkörper 12 unterscheidet sich von dem in den Figuren 9 und 10 dargestellten Wälzkörper 12 durch endseitig angebrachte Fasen 19, die nicht Teil der Wälzflächen 15 sind. Diese Ausführung ist besonders unempfindlich gegen Verkippungen relativ zu den Laufflächen 13, 14.

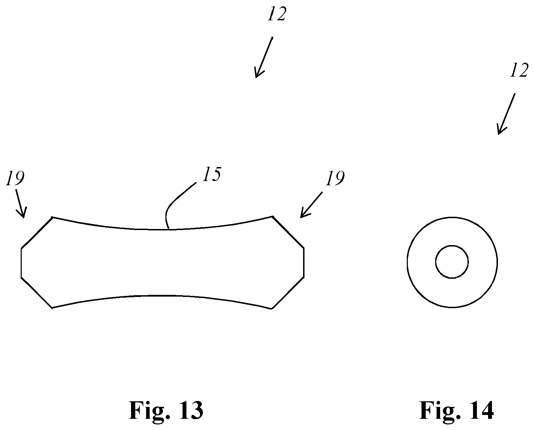

Die Figuren 13 und 14 zeigen in einer Seitenansicht und in einer axialen Draufsicht ein weiteres Ausführungsbeispiel eines Wälzkörpers 12 für ein erfindungsgemäßes Spannungswellengetriebe. Der in den Figuren 13 und 14 dargestellte Wälzkörper 12 ist tailliert ausgebildet. Die Wälzfläche 15 kann im Querschnitt beispielsweise ein Kreissegment oder ein Ellipsensegment aufweisen.

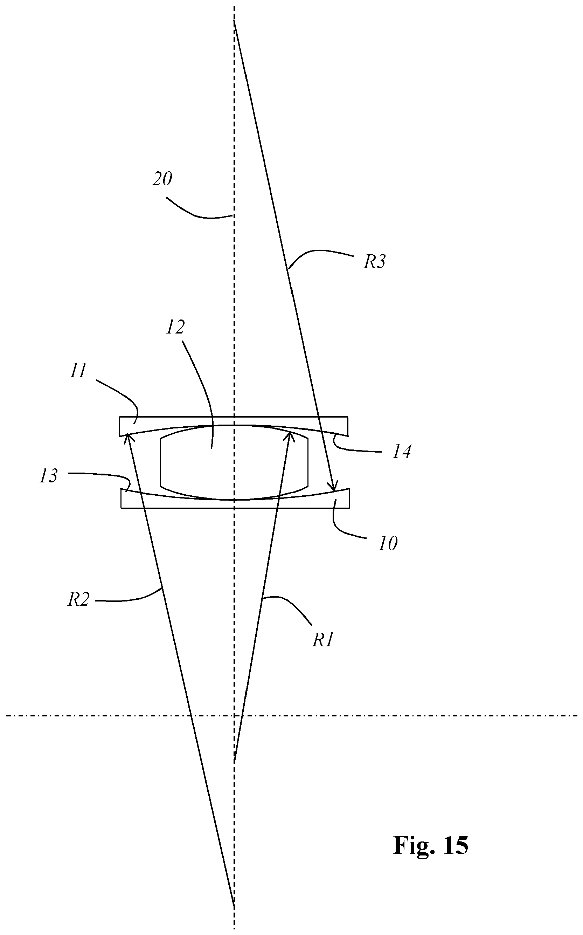

Fig. 15 zeigt eine Detailansicht des Wälzlagers eines erfindungsgemäßen Spannungswellengetriebes in einer Querschnittsebene längs der Axialrichtung. Das radialflexible Wälzlager 2 weist einen Innenring 10 und einen Außenring 11 auf, zwischen denen mehrere Wälzkörper 12 angeordnet sind, die keine Kugeln sind und deren Wälzflächen 15 über ihre axiale Länge keinen zylindrischen Anteil aufweisen. Konkret sind die Wälzkörper 12 ballig ausgebildet. Der Innenring 10 weist eine innere Lauffläche 13 auf. Der Außenring 11 weist eine äußere Lauffläche 14 auf, die mit den Wälzkörpern 12 in Kontakt stehen.

Die Laufflächen 13, 14 weisen in einer Querschnittsebene längs der Axialrichtung (entspricht der Zeichenebene) eine etwas geringere Krümmung auf als die Wälzflächen 15 der Wälzkörper 12, was bewirkt, dass die endseitigen Kanten der Wälzkörper 12 von den Laufflächen 13, 14 beabstandet sind und sich die Laufflächen 13, 14 bei zunehmender Drehmomentbelastung des Spannungswellengetriebes ausgehend von der Mitte 20 der Wälzkörper 12 in Richtung auf die Enden axial zunehmend an die Wälzkörper 12 anschmiegen.

Die Laufflächen 13, 14 können ganz allgemein (abgesehen von der einander entgegengesetzten Ausrichtung) in einer Querschnittsebene längs der Axialrichtung dieselbe Krümmung aufweisen. Insbesondere ist es jedoch auch möglich, dass die innere Lauffläche 13 eine andere, insbesondere größere, Krümmung (beispielsweise bei einer kreisbogenförmigen Krümmung einen kleineren Krümmungsradius) aufweist als die äußere Lauffläche 14. Eine solche Ausführung ist im Hinblick auf eine hohe Lebensdauer ganz besonders vorteilhaft. Alternativ ist es auch möglich, dass die innere Lauffläche 13 eine kleinere Krümmung (beispielsweise bei einer kreisbogenförmigen Krümmung einen größeren Krümmungsradius) aufweist als die äußere Lauffläche 14.

Die Wälzflächen der Wälzkörper 12 weisen bei diesem Ausführungsbeispiel jeweils die Form eines Rotationskörpers auf, dessen erzeugende Kurve ein Wälzkörper-Kreissegment mit dem Radius R1 ist. Die innere Lauffläche 13 weist die Form eines Rotationskörpers auf, dessen erzeugende Kurve ein Laufflächen-Kreissegment mit dem Radius R2 ist. Die äußere Lauffläche 14 weist die Form eines Rotationskörpers auf, dessen erzeugende Kurve ein Laufflächen-Kreissegment mit dem Radius R3 ist.

Es hat sich gezeigt, dass es ganz besonders vorteilhaft ist, wenn der Radius R1 im Bereich des 0,3-fachen bis 2,0-fachen des Teilkreisdurchmessers der Flexsplineverzahnung liegt. Es hat sich außerdem gezeigt, dass es ganz besonders vorteilhaft ist, wenn die Radien R2 und R3 jeweils im Bereich des 0,3-fachen bis 2,1-fachen des Teilkreisdurchmessers der Flexsplineverzahnung liegen. Es kann insbesondere vorteilhaft vorgesehen sein, dass der Radius R2 größer als der Radius R3 ist.

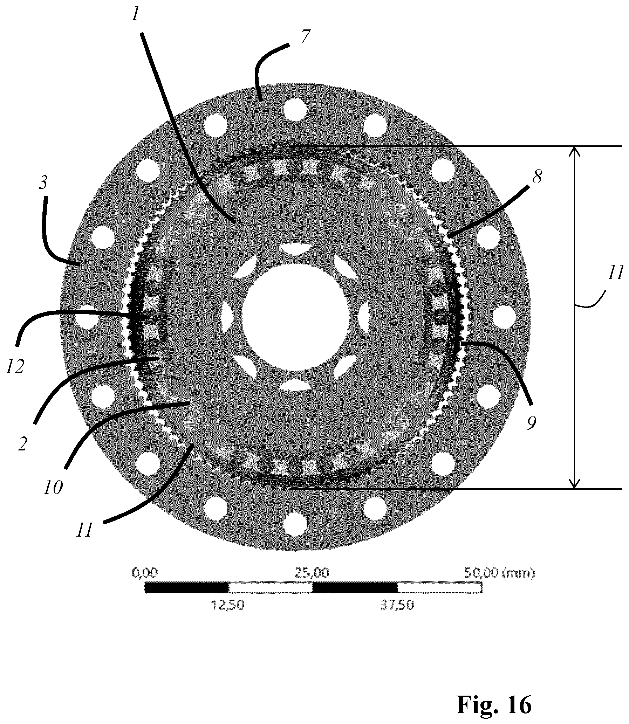

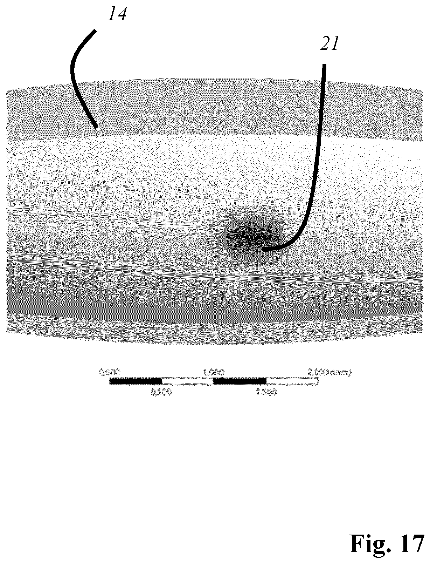

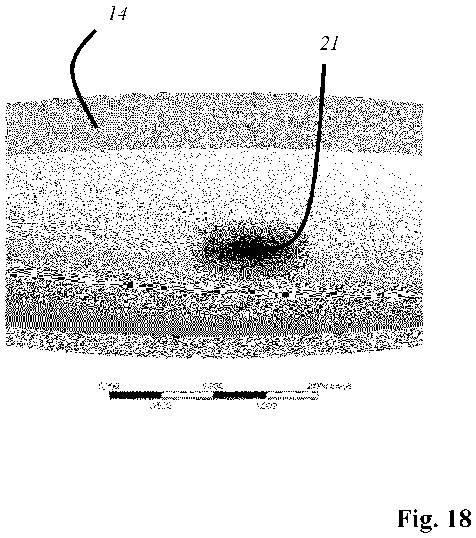

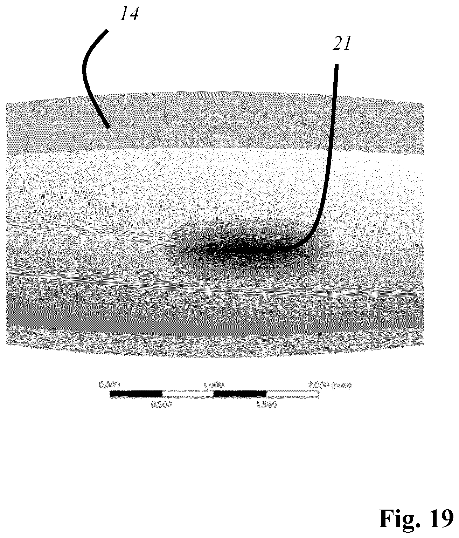

Fig. 16 zeigt ein neuntes Ausführungsbeispiel eines erfindungsgemäßen Spannungswellengetriebes in einer Draufsicht in Axialrichtung, das als Simulationsgrundlage für die in den Figuren 17 bis 19 gezeigten Simulationsergebnisse, die mit dem Simulationsprogramm ANSYS erarbeitet wurde, dient.

Das Spannungswellengetriebe ist als Topfgetriebe ausgebildet und weist einen Wellengenerator 1 auf, der mittels eines radialflexiblen Wälzlagers 2 relativ zu einem Flexspline 3 rotierbar gelagert ist. Bei dem Flexspline 3 handelt es sich um einen Flextopf, der einen (nicht dargestellten) Flextopfboden 4 aufweist. Das Spannungswellengetriebe weist darüber hinaus einen Circularspline 7 mit einer Innenverzahnung 8 auf.

Der Flexspline 3 weist an seinem dem Topfboden 4 abgewandten Ende eine umlaufende Außenverzahnung 9 auf, die in der radialen Ebene der Hochachse des Wellengenerators (an zwei Stellen in die Innenverzahnung 8 des Circularsplines 7 eingreift. Das radialflexible Wälzlager 2 weist einen Innenring 10 und einen Außenring 11 auf, zwischen denen mehrere Wälzkörper 12 angeordnet sind, die keine Kugeln sind und deren Wälzflächen 15 über ihre axiale Länge keinen zylindrischen Anteil aufweisen. Konkret sind die Wälzkörper 12 ballig ausgebildet.

Der Flexspline weist einen Teilkreisdurchmesser von 50 mm auf. Die Wälzflächen der Wälzkörper 12 weisen jeweils die Form eines Rotationskörpers auf, dessen erzeugende Kurve ein Wälzkörper-Kreissegment mit dem Radius R1 von 16 mm ist. Der Wälzkörperdurchmesser (in radialer Richtung) beträgt in der Wälzkörpermitte 16 mm. Die innere Lauffläche 13 weist die Form eines Rotationskörpers auf, dessen erzeugende Kurve ein Laufflächen-Kreissegment mit dem Radius R2 von 22 mm ist. Die äußere Lauffläche 14 weist die Form eines Rotationskörpers auf, dessen erzeugende Kurve ein Laufflächen-Kreissegment mit dem Radius R3 von 22 mm ist.

Die Figuren 17 bis 19 zweigen jeweils eine Darstellung der Kontaktfläche 21 zwischen dem jeweils höchstbelasteten der Wälzkörper 12 und der äußeren Lauffläche 14 des neunten Ausführungsbeispiels eines erfindungsgemäßen Spannungswellengetriebes bei Leerlaufbelastung, bei einer Belastung mit dem Nenndrehmoment des Spannungswellengetriebes und bei einer Belastung mit dem Doppelten des Nenndrehmoments des Spannungswellengetriebes. Es ist zu erkennen, dass bei den Wälzkörpern die Länge der linienförmigen Kontaktfläche 21 mit zunehmender Drehmomentbelastung zunimmt. Die Simulation zeigt, dass sich die äußere Lauffläche 14 bei zunehmender Drehmomentbelastung des Spannungswellengetriebes an die Wälzkörper 12 anschmiegt und sich die auf die Wälzkörper 12 und die äußere Lauffläche 14 einwirkenden Presskräfte zunehmend auf eine größere Fläche verteilen. Für die (nicht dargestellte) innere Lauffläche 13 gilt analog dasselbe.

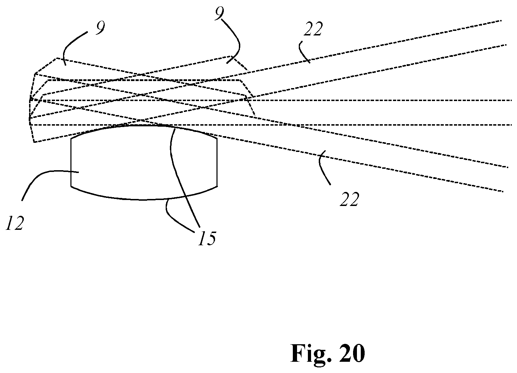

Fig. 20 veranschaulicht in einer extrem übertriebenen Darstellung eine vorteilhafte Möglichkeit hinsichtlich der Form der Wälzflächen der Wälzkörper. Hierbei entspricht in einer Querschnittsebene längs der Axialrichtung die Form der Wälzfläche 15 jedes Wälzkörpers 12 der Form der Einhüllenden (im mathematischen Sinne) der durch das Coning verursachten Kurvenschar der Flexsplinewandung 22 des Flexsplines 3. Die Figur 20 zeigt nicht die Anordnung der Wälzkörper in einem erfindungsgemäßen Wellgetriebe, sondern dient ausschließlich zur Illustration des vorgenannten Merkmals hinsichtlich der Form der Wälzflächen. Insbesondere ist erfindungsgemäß nicht vorgesehen, dass die Wälzkörper an einer in der Querschnittsebene längs der Axialrichtung nicht gekrümmten Lauffläche des Flexsplines 3 abrollen. Insbesondere kann zwischen den Wälzkörpern und dem Flexspline 3 ein Außenring 11 angeordnet sein, der die äußere Lauffläche 14 aufweist. Es ist auch möglich, dass der Flexspline 3 die gekrümmte äußere Lauffläche 14 aufweist.

### Bezugszeichenliste:

- 1: Wellengenerator
- 2: radialflexibles Wälzlager
- 3: Flexspline
- 4: Flextopfboden
- 5: Abtriebswelle
- 6: Antriebswelle
- 7: Circularspline
- 8: Innenverzahnung
- 9: Außenverzahnung
- 10: Innenring
- 11: Außenring
- 12: Wälzkörper
- 13: innere Lauffläche
- 14: äußere Lauffläche
- 15: Wälzfläche
- 16: Krempe
- 17: Dynamicspline
- 18: Weitere Innenverzahnung
- 19: Fase
- 20: Mitte
- 21: Kontaktfläche
- 22: Flexsplinewandung
- R1: Radius
- R2: Radius
- R3: Radius

## Patentansprüche

1. Spannungswellengetriebe mit einem Wellengenerator (1), der mittels eines radialflexiblen Wälzlagers (2) relativ zu einem Flexspline (3) rotierbar gelagert ist, wobei das radialflexible Wälzlager (2) mehrere Wälzkörper (12) aufweist, die keine Kugeln sind und deren Wälzflächen (15) über ihre axiale Länge keinen zylindrischen Anteil aufweisen, und wobei das radialflexible Wälzlager (2) zwei Laufflächen (13, 14), nämlich eine innere Lauffläche (13) und eine äußere Lauffläche (14), aufweist, zwischen denen die Wälzkörper (12) angeordnet sind und auf denen die Wälzkörper (12) abrollen, **dadurch gekennzeichnet, dass** die Laufflächen (13, 14) in einer Querschnittsebene längs der Axialrichtung gekrümmt sind und in der Querschnittsebene längs der Axialrichtung eine geringere Krümmung aufweisen, als die Wälzflächen (15) der Wälzkörper (12).

2. Spannungswellengetriebe nach Anspruch 1, **dadurch gekennzeichnet, dass**
a. die Wälzflächen (15) der Wälzkörper (12) jeweils die Form eines Rotationskörpers aufweisen, dessen erzeugende Kurve ein Wälzkörper-Kreissegment ist, und/oder dass
b. jede Lauffläche (13, 14) die Form eines Rotationskörpers aufweist, dessen erzeugende Kurve ein Laufflächen-Kreissegment ist.

3. Spannungswellengetriebe nach Anspruch 1 oder 2, **dadurch gekennzeichnet, dass**
a. die Wälzkörper (12) und/oder die Wälzflächen (15) der Wälzkörper (12) eine synklastische Form aufweisen, und/oder dass
b. die Wälzkörper (12) und/oder die Wälzflächen (15) der Wälzkörper (12) ballig ausgebildet sind, und/oder dass
c. die Wälzkörper (12) jeweils als Rotationsellipsoid oder als Abschnitt eines Rotationsellipsoids ausgebildet sind und/oder dass die Wälzflächen (15) der Wälzkörper (12) jeweils als eine Mantelfläche eines Abschnitts eines Rotationsellipsoids ausgebildet sind.

4. Spannungswellengetriebe nach Anspruch 1 oder 2, **dadurch gekennzeichnet, dass**
a. die Wälzflächen (15) der Wälzkörper (12) eine antiklastische Form aufweisen, und/oder dass
b. die Wälzkörper (12) und/oder die Wälzflächen (15) der Wälzkörper (12) tailliert ausgebildet sind, und/oder dass
c. die Wälzkörper (12) jeweils als Rotationshyperboloid oder als Abschnitt eines Rotationshyperboloids ausgebildet sind und/oder dass die Wälzflächen (15) der Wälzkörper (12) jeweils als eine Mantelfläche eines Abschnitts eines Rotationshyperboloids ausgebildet sind.

5. Spannungswellengetriebe nach einem der Ansprüche 2 bis 4, **dadurch gekennzeichnet, dass**
a. der Radius des Wälzkörper-Kreissegments im Bereich des 0,25-fachen bis 2,0-fachen des Teilkreisdurchmessers der Flexsplineverzahnung liegt, und/oder dass
b. der Radius des Laufflächen-Kreissegments im Bereich des 0,3-fachen bis 2,1-fachen des Teilkreisdurchmessers der Flexsplineverzahnung beträgt.

6. Spannungswellengetriebe nach einem der Ansprüche 1 bis 5, **dadurch gekennzeichnet, dass** in einer Querschnittsebene längs der Axialrichtung die innere Lauffläche (13) eine andere, insbesondere stärkere, Krümmung aufweist als die äußere Lauffläche (14).

7. Spannungswellengetriebe nach einem der Ansprüche 1 bis 6, **dadurch gekennzeichnet, dass**
a. das radialflexible Wälzlager einen Lagerinnenring (10) aufweist, der auf seiner Außenseite eine der Laufflächen (13, 14) aufweist, und/oder dass
b. das radialflexible Wälzlager einen Lageaußenring (11) aufweist, der auf seiner Innenseite eine der Laufflächen (13, 14) aufweist.

8. Spannungswellengetriebe nach einem der Ansprüche 1 bis 7, **dadurch gekennzeichnet, dass**
a. der Wellengenerator (1) eine der Laufflächen (13, 14) aufweist und/oder dass der Flexspline (3) eine der Laufflächen (13, 14) aufweist, oder dass
b. das radialflexible Wälzlager einen Lagerring aufweist, der eine der Laufflächen (13, 14) aufweist, und dass der Wellengenerator (1) oder der Flexspline (3) die andere der Laufflächen (13, 14) aufweist.

9. Spannungswellengetriebe nach einem der Ansprüche 1 bis 8, **dadurch gekennzeichnet, dass** das Verhältnis des Radius des Laufflächen-Kreissegments zu dem Radius des Wälzkörper-Kreissegments im Bereich von 1,01 bis 1,5 liegt.

10. Spannungswellengetriebe nach einem der Ansprüche 1 bis 9, **dadurch gekennzeichnet, dass** in einer Querschnittsebene längs der Axialrichtung wenigstens ein Teil der Form der Wälzflächen (15) der Wälzkörper (12) die Form der Einhüllenden der durch Coning verursachten Kurvenschar der Flexsplinewandung aufweist.

11. Radialflexibles Wälzlager für ein Spannungswellengetriebe nach einem der Ansprüche 1 bis 10, wobei das radialflexible Wälzlager (2) mehrere Wälzkörper (12) aufweist, die keine Kugeln sind und deren Wälzflächen (15) über ihre axiale Länge keinen zylindrischen Anteil aufweisen, und wobei das radialflexible Wälzlager (2) zwei Laufflächen (13, 14), nämlich eine innere Lauffläche (13) und eine äußere Lauffläche (14), aufweist, zwischen denen die Wälzkörper (12) angeordnet sind und auf denen die Wälzkörper (12) abrollen, **dadurch gekennzeichnet , dass** die Laufflächen (13, 14) in einer Querschnittsebene längs der Axialrichtung gekrümmt sind und in der Querschnittsebene längs der Axialrichtung eine geringere Krümmung aufweisen, als die Wälzflächen (15) der Wälzkörper (12).

12. Roboter, insbesondere Industrieroboter, beinhaltend wenigstens ein Spannungswellengetriebe nach einem der Ansprüche 1 bis 10.

13. Robotergelenk, das wenigstens ein Spannungswellengetriebe nach einem der Ansprüche 1 bis 10 aufweist.

14. Fahrzeugkomponente, insbesondere Fahrwerk, insbesondere aktives Fahrwerk für ein Kraftfahrzeug, oder Lenkung, insbesondere PKW-Lenkung oder LKW-Lenkung, die wenigstens ein Spannungswellengetriebe nach einem der Ansprüche 1 bis 10 aufweist.

## Claims

1. Strain wave gear comprising a wave generator (1), which is rotatably mounted relative to a flexspline (3) by means of a radially flexible rolling bearing (2), wherein the radially flexible rolling bearing (2) comprises a plurality of rolling bodies (12) which are not balls and whose rolling surfaces (15) have no cylindrical portion over their axial length, and wherein the radially flexible rolling bearing (2) comprises two running surfaces (13, 14), namely an inner running surface (13) and an outer running surface (14), between which the rolling bodies (12) are arranged and on which the rolling bodies (12) roll, **characterized in that** the running surfaces (13, 14) are curved in a cross-sectional plane extending along the axial direction and, in the cross-sectional plane extending along the axial direction, have a smaller curvature than the rolling surfaces (15) of the rolling bodies (12).

2. Strain wave gear according to claim 1, **characterized in that**
a. the rolling surfaces (15) of the rolling bodies (12) each have the shape of a solid of revolution whose generating curve is a rolling-body circular segment, and/or that
b. each running surface (13, 14) has the shape of a solid of revolution whose generating curve is a running-surface circular segment.

3. Strain wave gear according to claim 1 or 2, **characterized in that**
a. the rolling bodies (12) and/or the rolling surfaces (15) of the rolling bodies (12) have a synclastic shape, and/or that
b. the rolling bodies (12) and/or the rolling surfaces (15) of the rolling bodies (12) are crowned, and/or that
c. the rolling bodies (12) are each configured as a rotational ellipsoid or as a section of a rotational ellipsoid and/or that the rolling surfaces (15) of the rolling bodies (12) are each configured as a lateral surface of a section of a rotational ellipsoid.

4. Strain wave gear according to claim 1 or 2, **characterized in that**
a. the rolling surfaces (15) of the rolling bodies (12) have an anticlastic shape, and/or that
b. the rolling bodies (12) and/or the rolling surfaces (15) of the rolling bodies (12) are of waisted design, and/or that
c. the rolling bodies (12) are each configured as a rotational hyperboloid or as a section of a rotational hyperboloid and/or that the rolling surfaces (15) of the rolling bodies (12) are each configured as a lateral surface of a section of a rotational hyperboloid.

5. Strain wave gear according to one of claims 2 to 4, **characterized in that**
a. the radius of the rolling-body circular segment lies within a range from 0.25 times to 2.0 times the pitch circle diameter of the flexspline toothing, and/or that
b. the radius of the running-surface circular segment lies within a range from 0.3 times to 2.1 times the pitch circle diameter of the flexspline toothing.

6. Strain wave gear according to one of claims 1 to 5, **characterized in that**, in a cross-sectional plane extending along the axial direction, the inner running surface (13) has a different, in particular stronger, curvature than the outer running surface (14).

7. Strain wave gear according to one of claims 1 to 6, **characterized in that**
a. the radially flexible rolling bearing comprises a bearing inner ring (10) which comprises one of the running surfaces (13, 14) on its outer side, and/or that
b. the radially flexible rolling bearing comprises a bearing outer ring (11) which comprises one of the running surfaces (13, 14) on its inner side.

8. Strain wave gear according to one of claims 1 to 7, **characterized in that**
a. the wave generator (1) comprises one of the running surfaces (13, 14) and/or the flexspline (3) comprises one of the running surfaces (13, 14), or that
b. the radially flexible rolling bearing comprises a bearing ring which comprises one of the running surfaces (13, 14), and the wave generator (1) or the flexspline (3) comprises the other one of the running surfaces (13, 14).

9. Strain wave gear according to one of claims 1 to 8, **characterized in that** the ratio of the radius of the running-surface circular segment to the radius of the rolling-body circular segment lies within a range from 1.01 to 1.5.

10. Strain wave gear according to one of claims 1 to 9, **characterized in that**, in a cross-sectional plane extending along the axial direction, at least a part of the shape of the rolling surfaces (15) of the rolling bodies (12) has the shape of the envelope of the family of curves of the flexspline wall caused by coning.

11. Radially flexible rolling bearing for a strain wave gear according to one of claims 1 to 10, wherein the radially flexible rolling bearing (2) comprises a plurality of rolling bodies (12) which are not balls and whose rolling surfaces (15) have no cylindrical portion over their axial length, and wherein the radially flexible rolling bearing (2) comprises two running surfaces (13, 14), namely an inner running surface (13) and an outer running surface (14), between which the rolling bodies (12) are arranged and on which the rolling bodies (12) roll, **characterized in that** the running surfaces (13, 14) are curved in a cross-sectional plane extending along the axial direction and, in the cross-sectional plane extending along the axial direction, have a smaller curvature than the rolling surfaces (15) of the rolling bodies (12).

12. Robot, in particular industrial robot, comprising at least one strain wave gear according to one of claims 1 to 10.

13. Robot joint comprising at least one strain wave gear according to one of claims 1 to 10.

14. Vehicle component, in particular a running gear, in particular an active running gear for a motor vehicle, or a steering system, in particular a passenger car steering system or a truck steering system, comprising at least one strain wave gear according to one of claims 1 to 10.

## Revendications

1. Engrenage à onde de déformation comprenant un générateur d'ondes (1), qui est monté rotatif par rapport à une flexspline (3) au moyen d'un roulement radialement flexible (2), le roulement radialement flexible (2) comprenant une pluralité de corps roulants (12) qui ne sont pas des billes et dont les surfaces de roulement (15) ne présentent aucune portion cylindrique sur leur longueur axiale, et le roulement radialement flexible (2) comprenant deux surfaces de roulement (13, 14), à savoir une surface de roulement intérieure (13) et une surface de roulement extérieure (14), entre lesquelles les corps roulants (12) sont disposés et sur lesquelles les corps roulants (12) roulent, **caractérisé en ce que** les surfaces de roulement (13, 14) sont incurvées dans un plan de coupe s'étendant selon la direction axiale et présentent, dans le plan de coupe s'étendant selon la direction axiale, une courbure inférieure à celle des surfaces de roulement (15) des corps roulants (12).

2. Engrenage à onde de déformation selon la revendication 1, **caractérisé en ce que**
a. les surfaces de roulement (15) des corps roulants (12) présentent chacune la forme d'un solide de révolution dont la courbe génératrice est un segment circulaire de corps roulant, et/ou **en ce que**
b. chaque surface de roulement (13, 14) présente la forme d'un solide de révolution dont la courbe génératrice est un segment circulaire de surface de roulement.

3. Engrenage à onde de déformation selon la revendication 1 ou 2, **caractérisé en ce que**
a. les corps roulants (12) et/ou les surfaces de roulement (15) des corps roulants (12) présentent une forme synclastique, et/ou **en ce que**
b. les corps roulants (12) et/ou les surfaces de roulement (15) des corps roulants (12) sont bombés, et/ou **en ce que**
c. les corps roulants (12) sont chacun configurés sous la forme d'un ellipsoïde de révolution ou d'une section d'un ellipsoïde de révolution et/ou les surfaces de roulement (15) des corps roulants (12) sont chacune configurées sous la forme d'une surface latérale d'une section d'un ellipsoïde de révolution.

4. Engrenage à onde de déformation selon la revendication 1 ou 2, **caractérisé en ce que**
a. les surfaces de roulement (15) des corps roulants (12) présentent une forme anticlaste, et/ou **en ce que**
b. les corps roulants (12) et/ou les surfaces de roulement (15) des corps roulants (12) présentent une forme étranglée, et/ou **en ce que**
c. les corps roulants (12) sont chacun configurés sous la forme d'un hyperboloïde de révolution ou d'une section d'un hyperboloïde de révolution et/ou les surfaces de roulement (15) des corps roulants (12) sont chacune configurées sous la forme d'une surface latérale d'une section d'un hyperboloïde de révolution.

5. Engrenage à onde de déformation selon l'une des revendications 2 à 4, **caractérisé en ce que**
a. le rayon du segment circulaire de corps roulant est compris dans une plage allant de 0,25 fois à 2,0 fois le diamètre du cercle primitif de la denture de la flexspline, et/ou **en ce que**
b. le rayon du segment circulaire de surface de roulement est compris dans une plage allant de 0,3 fois à 2,1 fois le diamètre du cercle primitif de la denture de la flexspline.

6. Engrenage à onde de déformation selon l'une des revendications 1 à 5, **caractérisé en ce que**, dans un plan de coupe s'étendant selon la direction axiale, la surface de roulement intérieure (13) présente une courbure différente, notamment plus importante, que la surface de roulement extérieure (14).

7. Engrenage à onde de déformation selon l'une des revendications 1 à 6, **caractérisé en ce que**
a. le roulement radialement flexible comprend une bague intérieure de roulement (10) qui présente, sur son côté extérieur, l'une des surfaces de roulement (13, 14), et/ou **en ce que**
b. le roulement radialement flexible comprend une bague extérieure de roulement (11) qui présente, sur son côté intérieur, l'une des surfaces de roulement (13, 14).

8. Engrenage à onde de déformation selon l'une des revendications 1 à 7, **caractérisé en ce que**
a. le générateur d'ondes (1) présente l'une des surfaces de roulement (13, 14) et/ou la flexspline (3) présente l'une des surfaces de roulement (13, 14), ou **en ce que**
b. le roulement radialement flexible comprend une bague de roulement qui présente l'une des surfaces de roulement (13, 14), et le générateur d'ondes (1) ou la flexspline (3) présente l'autre des surfaces de roulement (13, 14).

9. Engrenage à onde de déformation selon l'une des revendications 1 à 8, **caractérisé en ce que** le rapport du rayon du segment circulaire de surface de roulement au rayon du segment circulaire de corps roulant est compris dans une plage allant de 1,01 à 1,5.

10. Engrenage à onde de déformation selon l'une des revendications 1 à 9, **caractérisé en ce que**, dans un plan de coupe s'étendant selon la direction axiale, au moins une partie de la forme des surfaces de roulement (15) des corps roulants (12) présente la forme de l'enveloppe de la famille de courbes de la paroi de la flexspline provoquée par le coning.

11. Roulement radialement flexible pour un engrenage à onde de déformation selon l'une des revendications 1 à 10, le roulement radialement flexible (2) comprenant une pluralité de corps roulants (12) qui ne sont pas des billes et dont les surfaces de roulement (15) ne présentent aucune portion cylindrique sur leur longueur axiale, et le roulement radialement flexible (2) comprenant deux surfaces de roulement (13, 14), à savoir une surface de roulement intérieure (13) et une surface de roulement extérieure (14), entre lesquelles les corps roulants (12) sont disposés et sur lesquelles les corps roulants (12) roulent, **caractérisé en ce que** les surfaces de roulement (13, 14) sont incurvées dans un plan de coupe s'étendant selon la direction axiale et présentent, dans le plan de coupe s'étendant selon la direction axiale, une courbure inférieure à celle des surfaces de roulement (15) des corps roulants (12).

12. Robot, notamment robot industriel, comprenant au moins un engrenage à onde de déformation selon l'une des revendications 1 à 10.

13. Articulation de robot comprenant au moins un engrenage à onde de déformation selon l'une des revendications 1 à 10.

14. Composant de véhicule, notamment un train roulant, notamment un train roulant actif pour un véhicule automobile, ou un système de direction, notamment un système de direction pour voiture particulière ou un système de direction pour camion, comprenant au moins un engrenage à onde de déformation selon l'une des revendications 1 à 10.
